# EUROPÄISCHE PATENTSCHRIFT

(11) **EP 0 803 232 B1**
(45) Veröffentlichungstag und Bekanntmachung des Hinweises auf die Patenterteilung: **31.07.2002**
(21) Anmeldenummer: 97105901.9
(22) Anmeldetag: 10.04.1997
(51) Int. Cl.: A61C 5/08, A61C 5/10, A61C 8/00

(54) **Halteelement für einen herausnehmbaren Zahnersatz**
Retaining element for a removable dental prosthesis
Elément de retenue pour une prothèse dentaire

(30) Priorität: 25.04.1996 DE 19616618
(43) Veröffentlichungstag der Anmeldung: 29.10.1997
(73) Patentinhaber: FRIADENT GmbH, 68229 Mannheim (DE)
(72) Erfinder: Weigl, Paul Martin, Dr., 60528 Frankfurt (DE)
(74) Vertreter: Schmitt, Meinrad, Dipl.-Ing.

(56) Entgegenhaltungen:
- EP-A- 0 370 522
- DE-A- 3 840 399
- DE-A- 4 015 008

## Beschreibung

Die Erfindung bezieht sich auf ein Halteelement für einen herausnehmbaren Zahnersatz gemäß den im Oberbegriff des Patentanspruchs 1 angegebenen Merkmalen.

Als Halteelemente für herausnehmbaren Zahnersatz sind heute vor allem Stege, Doppelkronen, Anker, Klammern und Magnetattachments im Einsatz. Ausgehend von einer soliden Befunderhebung müssen neben der Mundhygiene und der prothetischen Wertigkeit vorhandener Pfeilerzähne vor allem Statik, Ästhetik, Handhabung, Erweiterbarkeit und Kosten des Zahnersatzes Berücksichtigung finden. Als weitere Aspekte sind Forderungen der Patienten nach biokompatiblen Werkstoffen sowie eine sehr anspruchsvolle Ästhetik zu beachten. Ferner wird durch verbesserte Hygieneaufklärung und -kontrolle, durch einen hohen zahnärztlichen Versorgungsgrad und zunehmende Verwendung von enossalen Implantaten die Indikation für herausnehmbaren Zahnersatz in ein höheres Lebensalter verschoben. Die damit einhergehenden Probleme wie abnehmende mentale und manuelle Fähigkeiten für Hygiene und Handhabung des Zahnersatzes sowie in den Vordergrund tretende multimorbide Alterserscheinungen und Krankheiten sind hinlänglich bekannt. Auf Doppelkronen verankerter Zahnersatz hält dem modernen Anforderungsprofil bezüglich Biokompatibilität und Ästhetik noch nicht in allen Punkten Stand. Obwohl die Fügetechniken - Laserschweißen oder Kleben - korrodierende Lotlegierungen ersetzen können und biokompatible Dentallegierungen oder Reintitan für Gerüste verfügbar sind, bleiben spezifische Kompromisse beim Halteelement Doppelkrone bestehen, und es sei vor allem auf die Korrosion zwischen Matrize und Patrize, das Haftverhalten und die sichtbaren Metallränder von Primärkronen hingewiesen.

Der Platzbedarf verblendeter Sekundärkronen erfordert einen hohen Hartsubstanzabtrag bei natürlichen Pfeilern. Sind zusätzlich noch größere Korrekturen bei einer unterschiedlichen Einschubrichtung der Pfeilerzähne vorzunehmen, so entsteht ein Zielkonflikt zwischen der Ästhetik des Zahnersatzes und der Vitalerhaltung des Zahnes. Ferner ist ein sichtbarer Metallrand der Primärkrone unvermeidlich, wenn aufgrund eines subgingivalen Präparationsrandes eine leichte Retraktion der Gingiva auftritt. Aus parodontalprophylaktischen Gründen kann die Primärkrone von der Sekundärkrone nur bis zum äquigingivalen Niveau erfaßt und verdeckt werden. Auch empfinden Patienten ein entstellendes Aussehen nach Herausnahme des Zahnersatzes, insbesondere aufgrund sichtbarer metallfarbener Primärkronen. Die Funktionalität von Doppelkronensystemen hängt stark von der manuellen Fertigungsqualität ab und erfordert erfahrene und hochqualifizierte Zahntechniker. Im Gegensatz zu konfektionierten Halteelementen ist keine reproduzierbare und exakte Einstellung der Friktion zwischen Primär- und Sekundärkrone möglich. Klinische Erfahrungen zeigen ein nicht konstantes Haftverhalten nach mehrjähriger Tragedauer oder nach Verschleißversuchen sowohl bei parallelwandigen Teleskopen als auch bei Konuskronen. Einerseits führen Verschleißerscheinungen zu abnehmender Friktion, welche schlecht oder überhaupt nicht verbessert werden kann. Andererseits kann auch das umgekehrte Verhalten eintreten, wenn hohe Kaukräfte große Flächen zwischen Primär- und Sekundärkrone kaltverschweißen. Kaltverschweißte Legierungsgefüge trennen sich meist nicht an der Stelle, wo sie gebunden wurden. Dies führt zu einer Zerrüttung und Aufrauhung der Fügeflächen und somit zu einer Friktionszunahme. Derartige Prothesen haften so fest, daß sie beim Herausnehmen das Parodont unphysiologisch belasten oder vom Patienten nicht mehr selbst herausgenommmen werden können. Des weiteren wirkt Speichel im Fügespalt als korrosives Medium zwischen den metallischen Oberflächen. Fast alle heutigen Implantatsysteme bieten Abutments aus Reintitan an. Falls Primärkrone und/oder Sekundärkrone nicht ebenfalls aus Reintitan bestehen, können im Spalt zwischen Matrize und Patrize Korrosionserscheinungen auftreten. Auf diese stark eingeschränkte Biokompatibilität reagiert besonders das perimplantäre Weichgewebe empfindlich, weil es aus qualitativ minderwertigem Narbengewebe besteht. Ein passiver Sitz von weitspannigen Grüsten mit Doppelkronen stellt an die Präzision eine Herausforderung dar, welche mit anspruchsvollen und zeitintensiven Zahntechischen und klinischen Arbeitsschritten verbunden ist.

Vor allem in der Implantatprothetik können kleine Imperfektionen eines weitspannig verblockten Gerüst nicht kompensiert werden, weil die ankylotische Osseointegration kaum Auslenkungen der Implantatpfeiler zuläßt - im Gegensatz zur parodontalen Lagerung natürlicher Zähne. Es verursacht Belastungsspitzen an den enossalen Implantatkörpern, die zu Knochenresorptionen führen können. Die Prozedur einer Gerüsttrennung, intraoralen Fixierung und erneutem Fügen im Labor tritt daher häufiger auf als bei zahngestützten Teilprothesen. Die o.g. Unzugänglichkeiten sind unter anderem auf die Interaktion und Kombination der metallischen Oberflächen von Doppelkronen zurückzuführen.

DE-A-4 015 008 zeigt ein Halteelement gemäß dem Oberbegriff des Anspruchs 1.

Hiervon ausgehend liegt der Erfindung die Aufgabe zugrunde, die aufgezeigten Schwierigkeiten bei einm Halteelement der genannten Art mit geringem Aufwand zu beseitigen. Das Halteelement soll einen geringen Fertigungsaufwand erfordern und eine hohe Verschleißfestigkeit und eine weitgehend konstante Haftkraft zwischen den Anlageflächen oder korrespondierenden Oberflächen der Doppelkronen sollen sichergestellt sein.

Die Lösung dieser Aufgabe erfolgt gemäß den kennzeichnenden Merkmalen des Patentanspruchs 1.

Das erfindungsgemäße Halteelement zeichnet sich durch eine funktionsgerechte Konstruktion aus und ermöglicht mit geringem Fertigungsaufwand die Vorgabe einer zumindest näherungsweise konstanten Haltekraft für den Zahnersatz. Die Primärkrone besteht zumindest im Bereich der Anlageflächen aus Keramik, und die Gewebefreundlichkeit, Härte, Korrosionsbeständigkeit und Farbe der Dentalkeramik werden in vorteilhafter Weise genutzt. Die vollkeramische Primärkrone dient als zylindrisch parallelwandige oder konische Patrize und die hochglanzpolierte Keramikoberfläche zeigt eine hohe Biokompatibilität gegenüber dem periimplantären Weichgewebe und geringe Plaqueaffinität. Die Primärkrone ist auf dem Zahn oder einem Implantatattachment adhäsiv befestigt, wobei als Befestigungsmittel insbesondere Klebemittel oder Zement zur Verwendung kommen. Da das Verbundverfahren bei Raumtemperatur durchgeführt wird, werden Dimensions- oder Strukturveränderungen nicht konditionierter Werkstoffregionen vermieden, wie es beispielsweise beim Aufbrennen von Keramik auf Titan zu beachten ist. Der Verbund kann in zweckmäßiger Weise standardisiert und industriell durchgeführt werden. Durch die industrielle Fertigung der keramischen Primärkrone wird zudem nicht nur eine hohe Präzision gewährleistet, sondern es werden erhebliche Fertigungsvorteile erzielt. Die vorgefertigte und standardisierte Primärkrone wird entweder auf dem Zahn oder einem Implantat befestigt. In zweckmäßiger Weise ist die Primärkrone als ein rotationsgesichertes Titan-Abutment eines Implantats ausgebildet und mit der vollkeramischen Oberfläche versehen. Zwischen der Keramik und dem Titan-Abutment besteht somit keine Korrosionsproblematik, wie es zwischen Dentallegierungen und Titan der Fall ist. In zweckmäßiger Weise wird der Verbund zwischen Titan-Abutment und Keramik durch konventionelle Verfahren erzielt, und zwar die Oberflächenkonditionierung des Titans mit Silicoter, Rocatec oder Kevloc-Verfahren. Die Oberflächenkonditionierung der Keramik erfolgt nach den Angaben des Herstellers, um so ein funktionssicheres Verbundkomposit zwischen Titan und Keramik zu erhalten.

Der derart hergestellte Verbundwerkstoff zeichnet sich im Vergleich zur spröden Keramik durch eine erhöhte Lebensdauerwahrscheinlichkeit aus. In zweckmäßiger Weise wird die keramische Oberfläche der Primärkrone und insbesondere des gefertigten Titan-Keramik-Abutments vom Zahntechniker individuell geschliffen, so daß mit hoher Präzision eine gemeinsame Einschubrichtung mehrerer Halteelemente einer Prothese erzielt werden kann.

Die Sekundärkrone und/oder Matrize besteht aus einer Dentallegierung, Reintitan oder Feingold. Die Matrize wird im zahntechnischen Labor, insbesondere automatisch aus Feingold, im Galvanisierungsautomaten gefertigt. Das Feingold wird hierbei direkt auf die keramische Oberfläche aufgebracht und vorzugsweise aufgalvanisiert. Das direkte Aufgalvanisieren gewährleistet eine hohe Passungspräzision zwischen Matrize und Patrize. Durch diese Passungspräzision und die Materialpaarung Keramik/Feingold ist ein tribologisches System geschaffen, welches eine hohe Verschleißfestigkeit und eine konstante Haftkraft zwischen Matrize und Patrize aufweist. Darüber hinaus ist hervorzuheben, daß die Haftkraft und die Passungspräzision der Matrize praktisch unabhängig ist von der manuellen Fertigkeit des Zahntechnikers. Des weiteren werden in besonders zweckmäßiger Weise die Matrizen intraoral in das Prothesengerüst eingeklebt, so daß ein hochpräziser und spannungsfreier Sitz der Prothese auf mehreren Halteelementen gewährleistet wird.

Als zusätzliche Haftkomponente wirkt in besonders zweckmäßiger Weise im Fügespalt zwischen der Primär- und Sekundärkrone der Speichelfilm, wobei praktisch unabhängig von den verwendeten Werkstoffen ein tribologisches System definiert ist. Beim Trennen der Matrize von der Patrize entsteht ein Unterdruck, welcher über kapillare Spalträume ausgeglichen wird. Die von der Spaltbreite abhängigen Strömungswiderstände wirken einer Trennung der beiden Kronen entgegen. Weiterhin wirkt die Adhäsion des Speichelfilms. Bei direkt aufgalvanisierten Feingoldmatrizen beträgt die Schichtstärke des Speichelfilm im Fügespalt ubiquitär nur noch ca. 5 µm. Diese sehr kleine Spaltfuge vergrößert in vorteilhafter Weise die physikalischen Phänomene des kapillaren Strömungswiderstandes und der Adhäsionswirkung der Speichelflüssigkeit. Der Speichel fungiert zusätzlich als Schmiermittel im tribologischen System. Durch die geringe Oberflächenrauhigkeit der Keramik wirkt das Feingold zusätzlich als Festkörper-Schmiermittel. Eine frikative mechanische Reibung zwischen den Oberflächen der Keramikpatrize und dem Feingoldmatrize kann somit völlig vernachlässigt werden. Mit dem erfindungsgemäßen Halteelement wird in besonders zweckmäßiger Weise der erläuterte Haltemechanismus durch die perfekte Passung der direkt aufgalvanisierten Matrize in Kombination mit den Materialeigenschaften von Feingold gewährleistet. Eine diffizile Einstellung der Friktion durch den Zahntechniker ist somit nicht erforderlich.

Das erfindungsgemäß vorgeschlagene Halteelement für einen herausnehmbaren Zahnersatz gewährleistet eine geringe Plaqueretention, einfache Handhabung für den Patienten, gleichbleibende Abzugskräfte, Verschleißfreiheit, Biokompatibilität und geringen zahntechnischen sowie klinischen Arbeitsaufwand. Die Primärkrone aus Vollkeramik ist auf Zähnen oder Implantatabutments adhäsiv befestigt oder ist bereits industriell auf das Abutment aufgebracht. Die Sekundärkrone wird konventionell aus Dentallegierungen, galvanogeformtem Gold oder Reintitan gefertigt. Durch die vollkeramische Primärkrone wird ein Kaltverschweißen mit der metallischen Sekundärkrone verhindert. Selbst hohe Kaukräfte führen bei Ausbildung der Sekundärkrone aus Feingold nicht zu einem Ansteigen der Abzugskraft für das Herausnehmen der Teilprothese. Des weiteren wird Korrosion im Fügespalt vermieden. Die ausgezeichnete Gewebefreundlichkeit und geringe Plaqueaffinität von Dentalkeramiken ermöglichen dauerhaft gesunde parodontale bzw. perimplantäre Verhältnisse. Die nach Prothesenentnahme auftretende Demaskierung des Patienten wird durch die zahnfarbenen Primärkronen aus Keramik gemildert.

Besonders günstige klinische Ergebnisse werden mit Sekundärkappen aus galvanogeformten Feingold erzielt, welche direkt auf die polierte keramische Oberfläche galvanisiert und anschließend in das Prothesengerüst eingeklebt werden. Aufgrund der hohen Paßgenauigkeit resultiert ein extrem dünner Speichelfilm zwischen Keramik und Feingold, wodurch ein tribologisches System mit hoher Verschleißfestigkeit geschaffen ist. Die Trennung beider Kronen beruht im wesentlichen auf dem Reißen des Speichelfilms und eine diffizile Einstellung der Friktion zwischen den Kronen ist nicht erforderlich.

Weiterbildungen und besondere Ausgestaltungen der Erfindung sind in den Unteransprüchen angegeben.

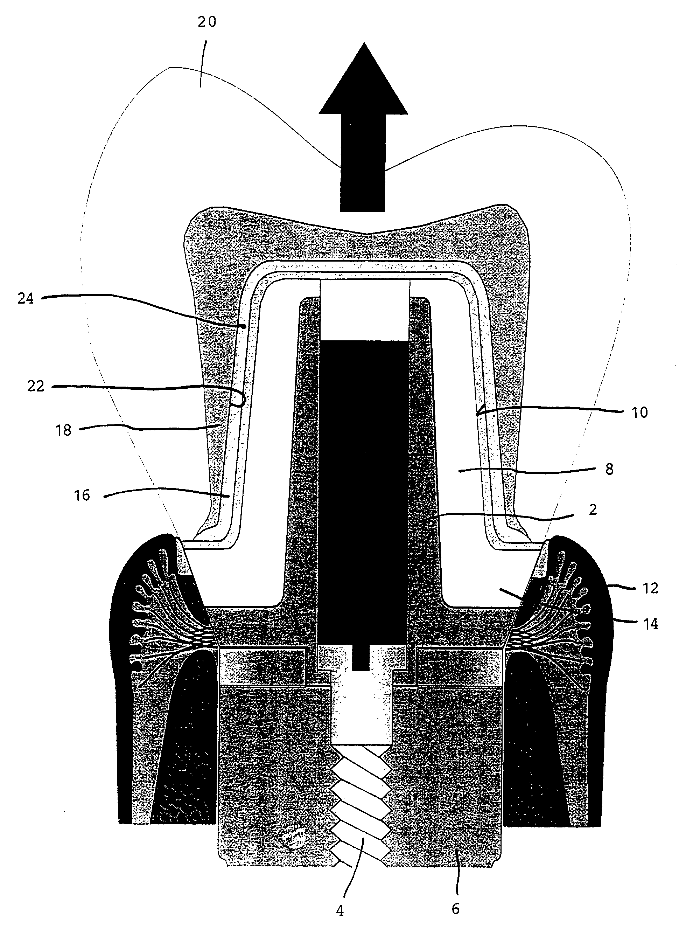

Die Erfindung wird anhand des in der Zeichnung dargestellten besonderen Ausführungsbeispiels näher erläutert, ohne daß insoweit eine Beschränkung der Erfindung erfolgt.

Die Zeichnung zeigt in einem axialen Längsschnitt ein Abutment 2, welches mittels einer Schraube 4 auf einem Implantatkörper 6 befestigt ist. Mit dem Abutment 2 ist eine vollkeramische Patrize oder Primärkrone 8 fest verbunden. Die Oberfläche 10 der Primärkrone 8 ist hochglanzpoliert. Zur Herstellung der hochglanzpolierten Oberfläche gelangt in zweckmäßiger Weise eine Schleifscheibe zum Einsatz, welche bevorzugt mit Korundpapier beklebt ist. Aufgrund dieses Herstellungsschritts wird eine exakte und hochglanzpolierte Außenkontur der vollkeramischen Primärkrone gewährleistet. Bei dem hier dargestellten Ausführungsbeispiel ist die Oberfläche 10 der Primärkrone 8 konisch ausgebildet, wobei der Konuswinkel den Erfordernissen entsprechend vorgegeben ist. Des weiteren kann im Rahmen der Erfindung die Oberfläche 10 der Primärkrone 8 zylindrisch ausgebildet sein. Zur Bearbeitung der Primärkrone wird diese mit Hilfe ihres Preßkanals in einer Spannvorrichtung fixiert. Die Primärkrone 8 ist auf dem Metallabutment 2 adhäsiv befestigt. Zur Bearbeitung der Keramikoberfläche können ferner konventionelle Fräsgeräte zum Einsatz gelangen, wobei eine mit Schleifpapier belegte Walze eingespannt wird.

Die dünnwandige vollkeramische Primärkrone, welche individuell für einen natürlichen Zahn vorgesehen ist, weist bis zur endgültigen adhäsiven Befestigung im Munde eine hohe Fragilität auf, und ein viskoses Befestigungskomposit kann bei einem zu forcierten Plazieren zum Bruch der Krone führen. Zur Vermeidung dieses Nachteils wird daher bei der Herstellung eine Galvanokappe auf die Primärkappe während der adhäsiven Befestigung aufgesetzt. Das Verdrängen des Befestigungskomposits erzeugt zwar in der Keramik Zugspannungen, welche jedoch in zweckmäßiger Weise auf die formschlüssig fassende Galvanokappe übertragen und somit abgebaut werden.

Die Primärkrone 8 enthält ferner im Bereich der Gingiva 12 in zweckmäßiger Weise eine Stufe 14 mit vergrößertem Außendurchmesser. Hierdurch ist ausreichend zervikaler Platz für die Verblendung der Sekundärstruktur geschaffen.

Das Halteelement enthält ferner eine Matrize oder Sekundärkrone 16, welche mit einem Gerüst 18 des herausnehmbaren Zahnersatzes verbunden und welche vorzugsweise als Kappe ausgebildet ist. Das Gerüst 18 trägt in bekannter Weise ferner eine Verblendung 20. Zwischen der inneren Oberfläche 22 der Sekundärkrone 16 und der äußeren Oberfläche 10 der Primärkrone ist ein Fügespalt 24 vorhanden, welcher aufgrund der Kapillarwirkung in der Mundhöhle mit Speichel ausgefüllt ist. Erfindungsgemäß ist die Sekundärkrone aus Dentallegierungen, galvanogeformtem Gold oder Reintitan hergestellt. Sofern die Sekundärkrone aus Feingold besteht, weist der Fügespalt 24 eine Breite in der Größenordnung von 5 µm auf.

In besonders zweckmäßiger Weise ist die Sekundärkrone 16 durch direktes Aufgalvanisieren von Feingold auf die Primärkrone 8 hergestellt. Hierzu wird die Außenkontur der vollkeramischen Primärkrone 8 vorzugsweise mit einer Lage aus leitfähigem Material, insbesondere Silberleitlack, versehen. Nachfolgend wird in einem weiteren Verfahrensschritt die Galvanisierung der Sekundärkrone durchgeführt. Es entsteht hierbei eine Feingoldkappe, welche eine Schichtstärke von 0,1 bis 0,2 mm aufweist. Die Schichtstärke wird durch Vorgabe der Galvanisierungszeit und Stromstärke den Erfordernissen entsprechend vorgegeben. Nachfolgend wird diese Galvanokappe von der Primärkrone getrennt, wobei in zweckmäßiger Weise das leitfähige Material, insbesondere der Silberleitlack, durch kurzes Einwirken hochprozentiger Salpetersäure entfernt wird. Die derart durch ein galvanisches Verfahren hergestellte, als Galvanokappe ausgebildete Sekundärkrone gewährleistet eine optimale Passung bezüglich der Primärkrone 8. Im Unterschied zu einem Replikaverfahren wird durch das direkte Aufgalvanisieren auf die standardisierte und industriell vorgefertigte Primärkrone eine erhebliche Vereinfachung des Herstellverfahrens sowie eine hohe Präzision gewährleistet.

Die Verbindung der Sekundärkrone 16 mit dem Gerüst 18, insbesondere aus Reintitan oder Cr-Co-Mo, erfolgt in besonders zweckmäßiger Weise intraoral über eine Klebeverbindung. Durch diese Fügetechnik ist ein absolut passiver Sitz der Prothese, insbesondere bei mehreren Implantatpfeilern, gewährleistet. Es sei festgehalten, daß nach einer Kieferrelationsbestimmung und einer Funktionsabformung das Gerüst 18 mit konventionellen Prothesen- und Verblendungskunststoff fertiggestellt wird. Die eingeklebten Galvanokappen bzw. Sekundärkronen 16 erhalten hierdurch eine zusätzliche marginale Festigkeit, so daß auch Verkantungen beim Einsetzen unbeschadet toleriert werden.

### Bezugszeichen

- 2: Abutment
- 4: Schraube
- 6: Implantatkörper
- 8: Primärkrone / Patrize
- 10: Oberfläche von 8
- 12: Gingiva
- 14: Stufe
- 16: Sekundärkrone / Matrize
- 18: Gerüst
- 20: Verblendung
- 22: Oberfläche
- 24: Fügespalt

## Patentansprüche

1. Halteelement für herausnehmbaren Zahnersatz, enthaltend eine mit dem Kiefer fest verbindbare Primärkrone (8) und eine von dieser lösbare Sekundärkrone (16), welche mit dem Zahnersatz fest verbindbar ist, wobei die Sekundärkrone (16) aus einer Dentallegierung, Reintitan oder direkt aufgebrachtem Feingold besteht, die Primärkrone (8) und die Sekundärkrone (16) miteinander korrespondierende konische oder zylindrische Oberflächen (10, 22) aufweisen, und die Primärkrone (8) auf dem Zahn oder einem Implantatabutment (2) adhäsiv befestigbar ist,
**dadurch gekennzeichnet,**
**daß** die Primärkrone (8) aus Vollkeramik besteht.

2. Halteelement nach Anspruch 1, **dadurch gekennzeichnet, daß** die Primärkrone (8) eine Stufe (14) aufweist, welche im Bereich der Gingiva (12) angeordnet ist.

3. Halteelement nach Anspruch 1 oder 2, **dadurch gekennzeichnet, daß** die Oberfläche (10) der Primärkrone (8) poliert, insbesondere hochglanzpoliert, ausgebildet ist.

4. Halteelement nach einem der Ansprüche 1 bis 3, **dadurch gekennzeichnet, daß** die Primärkrone (8) und/oder deren Verbindung mit dem Abutment (2) und/oder die Sekundärkrone (16) industriell vorgefertigt sind.

5. Halteelement nach einem der Ansprüche 1 bis 4, **dadurch gekennzeichnet, daß** die Sekundärkrone (16) durch direktes Galvanisieren auf die Oberfläche (10) der Primärkrone (8) hergestellt ist.

6. Halteelement nach Anspruch 5, **dadurch gekennzeichnet, daß** die Primärkrone (8) vor dem Aufgalvanisieren mit einer entfernbaren Schicht versehen werden kann.

7. Halteelement nach einem der Ansprüche 1 bis 6, **dadurch gekennzeichnet, daß** die Sekundärkrone (16), welche vorzugsweise als Galvanokappe ausgebildet ist, eine Schichtstärke zwischen 0,1 bis 0,2 mm aufweist.

8. Halteelement nach einem der Ansprüche 1 bis 7, **dadurch gekennzeichnet, daß** die Sekundärkrone (16) intraoral mit einem Gerüst (18) des Zahnersatzes, insbesondere über eine Klebeverbindung, verbunden ist.

## Claims

1. Retaining element for removable dental prosthesis, containing a primary crown (8) which can be fixedly connected to the jaw and a secondary crown (16) which is detachable therefrom and can be fixedly connected to the dental prosthesis, in which the secondary crown (16) consists of a dental alloy, pure titanium or directly applied fine gold, the primary crown (8) and the secondary crown (16) have corresponding conical or cylindrical surfaces (10, 22) and the primary crown (8) can be fixed adhesively to the tooth or an implant abutment (2), **characterised in that** the primary crown (8) is all ceramic.

2. Retaining element according to claim 1, **characterised in that** the primary crown (8) has a step (14) arranged in the region of the gingiva (12).

3. Retaining element according to claim 1 or claim 2, **characterised in that** the surface (10) of the primary crown (8) is polished, in particular highly polished.

4. Retaining element according to one of claims 1 to 3, **characterised in that** the primary crown (8) and/or its connection to the abutment (2) and/or the secondary crown (16) are industrially prefabricated.

5. Retaining element according to one of claims 1 to 4, **characterised in that** the secondary crown (16) is produced by direct electroforming on to the surface (10) of the primary crown (8).

6. Retaining element according to claim 5, **characterised in that** the primary crown (8) can be provided with a removable layer prior to the electroforming.

7. Retaining element according to one of claims 1 to 6, **characterised in that** the secondary crown (16), preferably in the form of an electroformed cap, has a layer thickness of between 0.1 and 0.2 mm.

8. Retaining element according to one of claims 1 to 7, **characterised in that** the secondary crown (16) is connected intraorally to a frame (18) of the dental prosthesis, in particular by means of a bonded joint.

## Revendications

1. Élément de retenue pour une prothèse dentaire amovible, comprenant une couronne primaire (8) pouvant être reliée solidement à la mâchoire et une couronne secondaire (16) pouvant être détachée de celle-ci, qui peut être reliée solidement à la prothèse dentaire, la couronne secondaire (16) étant composée d'un alliage dentaire, de titane pur ou d'or fin appliqué directement, la couronne primaire (8) et la couronne secondaire (16) présentant des surfaces (10, 22) coniques ou cylindriques mutuellement correspondantes, et la couronne primaire (8) pouvant être fixée par adhérence sur la dent ou un pilier (2) d'implant, ***caractérisé en ce que*** la couronne primaire (8) est tout en céramique.

2. Élément de retenue selon la Revendication 1, ***caractérisé en ce que*** la couronne primaire (8) présente un gradin (14) qui est placé au niveau de la gencive (12).

3. Élément de retenue selon la Revendication 1 ou 2, ***caractérisé en ce que*** la surface (10) de la couronne primaire (8) est polie, en particulier polie avec une haute brillance.

4. Élément de retenue selon l'une quelconque des Revendications 1 à 3, ***caractérisé en ce que*** la couronne primaire (8) et/ou sa liaison avec le pilier (2) et/ou la couronne secondaire (16) sont préfabriquées industriellement.

5. Élément de retenue selon l'une quelconque des Revendications 1 à 4, ***caractérisé en ce que*** la couronne secondaire (16) est fabriquée par galvanisation directe sur la surface (10) de la couronne primaire (8).

6. Élément de retenue selon la Revendication 5, ***caractérisé en ce que*** la couronne primaire (8) peut être munie avant la galvanisation d'une couche pouvant être supprimée.

7. Élément de retenue selon l'une quelconque des Revendications 1 à 6, ***caractérisé en ce que*** la couronne secondaire (16), qui est conformée de préférence en capuchon galvanique, présente une épaisseur de couche comprise entre 0,1 et 0,2 mm.

8. Élément de retenue selon l'une quelconque des Revendications 1 à 7, ***caractérisé en ce que*** la couronne secondaire (16) est reliée de manière intraorale à une armature (18) de la prothèse dentaire, en particulier par l'intermédiaire d'un collage.
